# EUROPÄISCHE PATENTSCHRIFT

(11) **EP 2 872 547 B1**
(45) Veröffentlichungstag und Bekanntmachung des Hinweises auf die Patenterteilung: **01.04.2020**
(21) Anmeldenummer: 13736913.8
(22) Anmeldetag: 12.07.2013
(51) Int. Cl.: C08G 77/60, C04B 35/571

(54) **VERFAHREN ZUR HERSTELLUNG EINES POLYSILANS**
METHOD FOR PRODUCING A POLYSILANE
PROCÉDÉ DE PRÉPARATION D'UN POLYSILANE

(30) Priorität: 13.07.2012 DE 102012212365
(43) Veröffentlichungstag der Anmeldung: 20.05.2015
(73) Patentinhaber: BJS Ceramics GmbH, 86368 Gersthofen (DE)
(72) Erfinder: LEHMANN, Tobias, 73249 Wernau (DE); BILL, Joachim, 71263 Weil der Stadt (DE); KIENZLE, Andreas, 86753 Möttingen (DE)
(74) Vertreter: Henkel & Partner mbB
(86) Internationale Anmeldenummer: PCT/EP2013/064840
(87) Internationale Veröffentlichungsnummer: WO 2014/009553

(56) Entgegenhaltungen:
- WO-A1-2011/064174
- US-A- 5 204 380
- DATABASE WPI Week 200103 Thomson Scientific, London, GB; AN 2001-018948 XP002712893, -& JP 2000 239391 A (SHINETSU CHEM IND CO LTD) 5. September 2000 (2000-09-05)
- ROBERT D. MILLER ET AL: "Polysilane high polymers", CHEMICAL REVIEWS, Bd. 89, Nr. 6, 1. September 1989 (1989-09-01), Seiten 1359-1410, XP055012452, ISSN: 0009-2665, DOI: 10.1021/cr00096a006

## Beschreibung

Die vorliegende Erfindung betrifft ein Verfahren zur Herstellung eines Polysilans, ein mit diesem Verfahren hergestelltes Polysilan, einen aus diesem Polysilan hergestellten Keramikformkörper aus Siliciumcarbid, wie insbesondere eine Siliciumcarbidfaser, einen daraus hergestellten Verbundwerkstoff sowie dessen Verwendung.

Keramikbauteile finden auf verschiedenen Gebieten der Technik Verwendung, und zwar beispielsweise in der Elektroindustrie, im Kraftfahrzeugbau, im Flugzeugbau und in der Medizintechnik. Technischen Keramikwerkstoffen wird dabei häufig und insbesondere, wenn diese für Anwendungen konzipiert werden, bei denen hohe Anforderungen an die Härte und Hitzebeständigkeit des Werkstoffes gestellt werden, wie beispielsweise bei Werkstoffen für die Raumfahrt und für den Flugzeugbau, wie Werkstoffen für eine Flugzeugturbine, Siliciumcarbid (SiC) zugesetzt. Siliciumcarbid ist eine chemische Verbindung, in welcher jedes Siliciumatom durch kovalente Bindungen mit vier tetraedrisch um das Siliciumatom angeordneten Kohlenstoffatomen verknüpft ist, und weist mithin einen dem von Diamant entsprechenden Aufbau auf. Aus diesem Grund zeichnet sich Siliciumcarbid - ganz ähnlich zu Diamant - durch eine außerordentlich hohe Härte und durch eine exzellente Temperaturbeständigkeit aus. Des Weiteren besitzt Siliciumcarbid auch eine sehr hohe chemische Beständigkeit und widersteht sogar bei höherer Temperatur Angriffen von Chlor, Schwefel, Sauerstoff und starken Säuren. Um die mechanischen Eigenschaften und insbesondere die Bruchzähigkeit des Materials noch weiter zu erhöhen, werden in letzter Zeit vermehrt Verbundwerkstoffe auf Basis von Siliciumcarbid eingesetzt, in denen Fasern aus Siliciumcarbid in einer Matrix aus Siliciumcarbid eingebettet sind. Derartige Materialien werden aufgrund ihrer herausragenden Eigenschaften beispielsweise für Hitzeschilder von Raumfahrzeugen und für Flugzeugturbinen eingesetzt. Für den unter anderem ebenfalls wünschenswerten Einsatz dieser Materialien in Kupplungs- und Bremsscheiben, sind diese Materialien derzeit jedoch noch zu kostenintensiv.

Üblicherweise erfolgt die Herstellung von Siliciumcarbidfasern in industriellem Maßstab über eine Wurtz-Kupplung, bei der ein Organohalogensilan, wie beispielsweise Dichlordimethylsilan, mit geschmolzenem Natrium zu einem Polydimethylsilan umgesetzt wird, welches dann anschließend zu einem Polycarbosilan umgewandelt wird. Dieses Polycarbosilan wird dann als Schmelze zu Fasern versponnen, bevor die so erhaltenen Fasern zunächst unter Verwendung von Sauerstoff oder Elektronenstrahlen gehärtet werden und schließlich durch eine Pyrolyse zu Siliciumcarbidfasern umgewandelt werden.

Nachteilig an dem zuvor beschriebenen Herstellungsverfahren ist jedoch, dass dieses zu Siliciumcarbidfasern führt, welche einen hohen Anteil an freiem Kohlenstoff aufweisen. Dabei handelt es sich um überschüssigen Kohlenstoff, welcher in dem erhaltenen Siliciumcarbid ungebunden vorliegt. Solcher freier Kohlenstoff ist jedoch unerwünscht, weil er die Einsatztemperatur von Siliciumcarbidfasern in oxidativen Atmosphären begrenzt, da er bei höheren Temperaturen unter Bildung von Kohlenmonoxid und Kohlendioxid verbrennt. Um den Anteil an freiem Kohlenstoff in Siliciumcarbidmaterialien zu verringern, ist es bereits vorgeschlagen worden, dem Polysilan vor der Pyrolyse ein Sinteradditiv, wie beispielsweise Aluminium oder Bor, zuzugeben oder das Siliciumcarbid nach der Pyrolyse zu glühen. Allerdings sind diese Verfahren aufwendig. Während bei der erstgenannten Variante unter Zusatz eines Sinteradditivs eine zweistufige Pyrolyse anstatt einer einstufigen Pyrolyse erforderlich ist und mit dieser aufgrund des Zusatzes eines Sinteradditivs zudem ein zusätzlicher Materialaufwand verbunden ist, erfordert die zweitgenannte Variante einen zusätzlichen Arbeitsschritt in Form eines Glühschrittes. Abgesehen davon führt ein Nachglüh- bzw. Nachbrennschritt aufgrund der Entfernung des freien Kohlenstoffs zu einem Material mit einer vergleichsweise hohen Porosität. Aus diesen Gründen sind diese beiden Varianten technisch, zeitlich und personell sehr aufwendig. Des Weiteren können zumindest bei der letztgenannten Variante durch die Entfernung des freien Kohlenstoffs während des Glühens Fehlstellen erzeugt werden, welche die mechanische Stabilität der Fasern herabsetzen. Ein weiterer Nachteil der zuvor beschriebenen Verfahren besteht darin, dass vor dem Verspinnen und vor der Pyrolyse zunächst eine Umwandlung des Polysilans zu einem Polycarbosilan vorgenommen wird, was einen separaten Arbeitsschritt und die Bereitstellung eines geeigneten Reaktors erfordert. Aus allen diesen Gründen sind die vorgenannten Verfahren unbefriedigend. Mithin besteht ein Bedarf für Verfahren, welche ohne zusätzliche Arbeitsschritte zu Siliciumcarbid mit einem nahezu stöchiometrischen Verhältnis von Silicium zu Kohlenstoff, d.h. zu Siliciumcarbid mit einem Verhältnis von Silicium zu Kohlenstoff von möglichst nahe 1, führen.

In der US 5,091,485 wird ein Verfahren zur Herstellung von Polysilanen beschrieben, welche durch Wärmebehandlung in Siliciumcarbid überführt werden können. Bei diesem Verfahren wird wenigstens ein Silanmonomer mit der Formel R¹R²SiCl₂, worin R¹ ein Wasserstoffatom oder ein Kohlenwasserstoffrest und R² ein Vinylrest ist, mit wenigstens einem monochlorierten Comonomer in der Gegenwart von geschmolzenem Natrium in einem organischen Lösungsmittel zu einem Polysilan umgesetzt. Als monochloriertes Comonomer kann dabei eine organische Verbindung, wie beispielsweise ein Benzylchlorid oder ein Organosilan mit der Formel R¹₃SiCl, worin R¹ ein Wasserstoffatom oder ein Kohlenwasserstoffrest sein kann, eingesetzt werden. Allerdings weist dieses Verfahren den Nachteil auf, dass bei diesem Polysilane mit einer verhältnismäßig niedrigen Molmasse erhalten werden, welche daher bei Raumtemperatur flüssig sind. Aus diesem Grund weisen die erhaltenen Polysilane vor der Umsetzung zu Siliciumcarbid eine schlechte Verarbeitbarkeit auf. Insbesondere ist ein Verspinnen dieser Polysilane zu Fasern und somit eine anschließende Umsetzung zu Siliciumcarbidfasern nicht oder nur mit unbefriedigenden Ergebnissen möglich. Abgesehen davon entsteht bei dem in dieser Druckschrift beschriebenen Verfahren ein vergleichsweise hoher Anteil an Polysilanen, welche in den während der Reaktion und Aufarbeitung verwendeten organischen Lösungsmitteln unlöslich sind. Diese unlöslichen Polysilane werden während der Aufarbeitungs- und Reinigungsschritte, die vor der Umsetzung zu Siliciumcarbid erforderlich sind, um ein möglichst reines Polysilan als Ausgangsmaterial zu erhalten, abgetrennt, was die Reaktionsausbeute beträchtlich verringert. Beispielsweise müssen bei der Reaktion entstandene, als Feststoff angefallene Produkte, wie beispielsweise Natriumchlorid, durch Filtration abgetrennt werden. Dabei verbleiben die unlöslichen Polysilananteile in dem Filterkuchen, während die löslichen Polysilananteile in dem Filtrat gelöst vorliegen. Somit kann lediglich der in dem Filtrat befindliche, lösliche Polysilananteil isoliert und einer weiteren Verwendung zugeführt werden, da eine denkbare Isolierung des unlöslichen Anteils aus dem Filterkuchen mit zu vielen zusätzlichen Arbeitsschritten und einem erhöhten technischen, zeitlichen und personellen Aufwand verbunden wäre.

Aus der JP 2000-239,391 A ist ein Verfahren zur Herstellung eines Polyysilans bekannt, bei dem die Silanmonomere Trichlorvinylsilan und Dichlormethylphenylsilan miteinander reagiert werden.

In der WO 2011/064174 A1 wird ein Verfahren zum Herstellen einer Polysilan-Polycarbosilan-Copolymer-Lösung offenbart, aus der sich nach Entfernen des Lösemittels und Pyrolyse ein keramischer Werkstoff mit einem Verhältnis von Silicium zu Kohlenstoff im Bereich von 0,8:1,0 bis 1,1 :1,0 erhalten lässt.

In der US 5,201,380 wird ein modifiziertes Polymermaterial beschrieben, welches durch ein Verfahren erhalten wird, bei dem SiH-funktionelle Organosiliconpolymere mit einer Metallocenverbindung als Katalysator reagiert wird.

Mithin liegt der vorliegenden Erfindung die Aufgabe zugrunde, ein Verfahren zur Herstellung eines Polysilans bereitzustellen, welches einfach, schnell und kostengünstig durchgeführt werden kann, und welches zu Polysilan mit einer vergleichsweise hohen Molmasse, mit einem in dem eingesetzten Lösungsmittel vergleichsweise hohen löslichen Anteil, mit einer ausgezeichneten Verarbeitbarkeit sowie mit einem Silicium- zu Kohlenstoffverhältnis von nahe dem stöchiometrischen Verhältnis von SiC führt.

Erfindungsgemäß wird diese Aufgabe durch ein Verfahren zur Herstellung eines Polysilans gelöst, das den Schritt des Reagierens von (i) wenigstens zwei Silanmonomeren und (ii) wenigstens einem Alkalimetall umfasst, wobei die Silanmonomere die folgenden Struktureinheiten aufweisen:
- wenigstens eine Arylgruppe,
- wenigstens eine Alkylgruppe,
- wenigstens eine Alkenylgruppe sowie
- wenigstens drei Halogenatome, wobei wenigstens drei der Halogenatome an ein Siliciumatom eines der Silanmonomere gebunden sind.

Diese Lösung basiert auf der überraschenden Erkenntnis, dass durch das Reagieren von wenigstens zwei Silanmonomeren, welche wenigstens eine Arylgruppe, wenigstens eine Alkylgruppe, wenigstens eine Alkenylgruppe sowie wenigstens drei Halogenatome, welche an ein Siliciumatom eines der Monomere gebunden sind, aufweisen mit einem Alkalimetall ein Polysilan erhalten wird, welches nicht nur eine vergleichsweise hohe Molmasse und gleichzeitig einen hohen Anteil an in organischen Lösungsmitteln löslichem Polysilan aufweist. Vielmehr führt dieses Verfahren insbesondere auch zu Polysilan, welches in einer anschließenden Pyrolyse in hoher Ausbeute zu Siliciumcarbid mit einem Verhältnis von Silicium zu Kohlenstoff von nahe dem stöchiometrischen Verhältnis von SiC, d.h. zu Siliciumcarbid mit einem Verhältnis von Silicium zu Kohlenstoff von nahe 1, umgewandelt wird, und, welches eine exzellente Verarbeitbarkeit insbesondere zu SiC-Fasern aufweist. Ferner ist das erfindungsgemäße Verfahren auch einfach, schnell und kostengünstig durchführbar, da auf zusätzliche Arbeitsschritte, wie die Zugabe eines Sinteradditivs und/oder einen Nachglühschritt bzw. auf ein Nachbrennen, verzichtet werden kann, weil das erfindungsgemäße Verfahren überraschenderweise auch ohne solche zusätzlichen Schritte zu Polysilan führt, welches allenfalls einen geringen Anteil an freiem Kohlenstoff aufweist. Als Konsequenz aus dem Verzicht auf die Entfernung von freiem Kohlenstoff weisen die durch Verspinnen erhaltenen Siliciumcarbidfasern eine äußerst geringe Porosität und eine exzellente mechanische Stabilität auf, da in diesen keine Fehlstellen infolge des Entfernens von freiem Kohlenstoff erzeugt werden. Zudem ist auch keine Umwandlung zu Polycarbosilan erforderlich.

Ohne an eine Theorie gebunden werden zu wollen, wird es erachtet, dass der Einsatz eines wenigstens eine Arylgruppe enthaltenden Silanmonomers - zusätzlich zu Silanmonomer(en), welche(s) wenigstens eine Alkenylgruppe, wenigstens eine Alkylgruppe sowie wenigstens drei an ein Siliciumatom gebundene Halogenatome aufweist/aufweisen - in der Reaktion mit dem Alkalimetall zu Polysilan mit einer verbesserten Verarbeitbarkeit und insbesondere mit einer verbesserten Verspinnbarkeit zu einer Polysilanfaser führt. Überraschenderweise wird bei dem Einsatz eines Silanmonomers mit Arylgruppe(n) - wenn gleichzeitig Silanmonomer(e) eingesetzt wird/werden, welche(s) wenigstens eine Alkenylgruppe, wenigstens eine Alkylgruppe sowie wenigstens drei an ein Siliciumatom gebundene Halogenatome aufweist/aufweisen - Polysilan erhalten, welches nach einer Pyrolyse - trotz des infolge der Arylgruppe niedrigen Silicium- zu Kohlenstoffverhältnisses dieses Silanmonomers - zu Siliciumcarbid mit einem nahe an dem stöchiometrischen Verhältnis von 1 liegenden Silicium- zu Kohlenstoffverhältnis führt. Auch der wenigstens einen Alkenylgruppe wird ein günstiger Einfluss auf die Verarbeitbarkeit des erhaltenen Polysilans zugeschrieben. Zudem erhöht diese Gruppe die Ausbeute an SiC bei der späteren Pyrolyse, was vermutlich darauf zurückzuführen ist, dass die Alkenylgruppe bei der Pyrolyse eine Vernetzung des Polysilans fördert. Des Weiteren entsteht bei der Pyrolyse von Alkenylgruppen kein oder zumindest allenfalls in reduziertem Ausmaß freier, nicht kovalent im Siliciumcarbid gebundener Kohlenstoff, welcher zu einem gegenüber dem stöchiometrischen Verhältnis verminderten Silicium- zu Kohlenstoffverhältnis führen würde. Zudem kommt dem Silanmonomer mit drei an ein Siliciumatom gebundenen Halogenatomen eine große Bedeutung für die Verarbeitbarkeit und insbesondere für eine exzellente Pyrolysierbarkeit des hergestellten Polysilans zu. Dabei wird angenommen, dass durch die Trifunktionalität dieses Monomers die Ausbildung cyclischer Silane verhindert wird, welche bei der späteren Pyrolyse aufgrund ihres niedrigen Siedepunkt verdampfen würden, was bei der Pyrolyse zu Hohlräumen in dem Material und zu einem Ausbeuteverlust führen würde. Schließlich dienen die Alkylgruppen als einfach bereitzustellende und kostengünstige Substituenten, welche die Ausbildung eines nahezu stöchiometrischen Silicium- zu Kohlenstoffverhältnis bei der Pyrolyse des Polysilans begünstigen.

Unter Polysilan wird im Sinne der vorliegenden Erfindung jedes Silan verstanden, welches wenigstens 5, bevorzugt wenigstens 10 und besonders bevorzugt wenigstens 20 miteinander verbundene Siliciumatome aufweist.

Unter Silanmonomer werden im Sinne der vorliegenden Erfindung alle Silane verstanden, welche keine Polysilane sind, d.h. Silane, welche weniger als 5 Siliciumatome, bevorzugt maximal 3 Siliciumatome, besonders bevorzugt maximal 2 Siliciumatome und ganz besonders bevorzugt lediglich ein Siliciumatom aufweisen.

Erfindungsgemäß werden bei dem Verfahren zur Herstellung des Polysilans wenigstens zwei Silanmonomere eingesetzt, welche als Struktureinheiten wenigstens eine Arylgruppe, wenigstens eine Alkylgruppe, wenigstens eine Alkenylgruppe sowie wenigstens drei an ein Siliciumatom gebundene Halogenatome enthalten. Dabei können die einzelnen vorgenannten Gruppen beliebig auf die zwei oder mehr eingesetzten Silanmonomere verteilt werden. Beispielsweise können vier Silanmonomere eingesetzt werden, welche jeweils eine der vorgenannten vier Struktureinheiten aufweist. Alternativ dazu können auch drei oder gar nur zwei Silanmonomere eingesetzt werden, von denen zwei oder drei jeweils wenigstens zwei der vorgenannten vier Struktureinheiten aufweisen. Bevorzugt sind nicht nur die drei Halogenatome, sondern auch jede der anderen der vorgenannten Struktureinheiten, also die wenigstens eine Arylgruppe, die wenigstens eine Alkylgruppe sowie die wenigstens eine Alkenylgruppe, jeweils direkt an ein Siliciumatom des entsprechenden Silanmonomers gebunden.

Grundsätzlich ist es auch möglich, dass einzelne Gruppen der Silanmonomere zwei oder gar mehr der vorstehend genannten vier Struktureinheiten aufweisen. Lediglich beispielsweise sei in diesem Zusammenhang eine Styrylgruppe genannt, welche sowohl eine Alkenylgruppe als auch eine Arylgruppe enthält. In einem solchen Fall erfüllt die Gruppe entsprechend viele der mindestens vier vorstehend genannten Kriterien, also in dem Fall einer Styrylgruppe die beiden Kriterien des Vorliegens wenigstens einer Arylgruppe und des Vorliegens wenigstens einer Alkenylgruppe. In einem solchen Fall enthalten die wenigstens zwei Silanmonomere mithin weniger als vier verschiedene Reste.

Grundsätzlich können in dem erfindungsgemäßen Verfahren ein oder mehr Silanmonomere mit ein oder mehr beliebigen Arylgruppen eingesetzt werden. Gute Ergebnisse werden jedoch insbesondere erhalten, wenn die in der Reaktion eingesetzten Silanmonomere wenigstens eine C₆-₂₅-Arylgruppe, bevorzugt eine C₆-₁₈-Arylgruppe, weiter bevorzugt eine C₆-₁₄-Arylgruppe, besonders bevorzugt eine C₆-₁₂-Arylgruppe und ganz besonders bevorzugt eine C₆-₁₀-Arylgruppe aufweisen. Am meisten bevorzugt wird in der Reaktion wenigstens ein Silanmonomer eingesetzt, welches als Arylgruppe wenigstens eine Phenylgruppe aufweist. Selbstverständlich werden innerhalb der genannten Bereiche für die Anzahl der C-Atome in der Arylgruppe nur solche Arylgruppen gewählt, die zu stabilen und handhabbaren Silanmonomeren führen.

Bei der wenigstens einen Arylgruppe, welche bevorzugt direkt an ein Siliciumatom eines der Silanmonomere gebunden ist, kann es sich um eine unsubstituierte Arylgruppe, wie die vorstehend erwähnte Phenylgruppe, oder um eine substituierte Arylgruppe handeln. In dem letztgenannten Fall kann die wenigstens eine Arylgruppe beispielsweise mit wenigstens einem Rest substituiert sein, welcher aus der Gruppe ausgewählt wird, welche aus linearen Alkylresten, verzweigten Alkylresten, cyclischen Alkylresten, linearen Alkenylresten, verzweigten Alkenylresten, cyclischen Alkenylresten, linearen Alkinylresten, verzweigten Alkinylresten, cyclischen Alkinylresten und beliebigen Kombinationen von zwei oder mehr der vorstehend genannten Reste besteht. Dabei können die vorgenannten Substituenten beispielsweise 1 bis 25 Kohlenstoffatome, bevorzugt 1 bis 15 Kohlenstoffatome, besonders bevorzugt 1 bis 10 Kohlenstoffatome, ganz besonders bevorzugt 1 bis 6 Kohlenstoffatome und höchst bevorzugt 1 bis 4 Kohlenstoffatome aufweisen.

Lediglich beispielsweise seien als geeignete Substituenten Methylreste, Ethylreste, n-Propylreste, Isopropylreste, n-Butylreste, sek-Butylreste, Isobutylreste, tert-Butylreste, Vinylreste, n-Propenylreste, Isopropenylreste, lineare Butenylreste, verzweigte Butenylreste, Ethinylreste, Propinylreste und Butinylreste genannt, welche alleine oder in beliebiger Kombination miteinander eingesetzt werden können. Besonders bevorzugt als Substituent, falls eingesetzt, sind Methylreste, Ethylreste, n-Propylreste, Isopropylreste, n-Butylreste, sek-Butylreste, Isobutylreste, tert-Butylreste und beliebige Kombinationen von zwei oder mehr der vorstehend aufgeführten Reste.

Auch wenn der Einsatz von substituierten Arylgruppen möglich ist, ist es gemäß der vorliegenden Erfindung besonders bevorzugt, dass unsubstituierte Arylgruppen eingesetzt werden, wie insbesondere Phenylgruppen.

In Weiterbildung des Erfindungsgedankens wird es vorgeschlagen, dass die wenigstens eine als Struktureinheit in den wenigstens zwei Silanmonomeren enthaltene Alkylgruppe, welche bevorzugt direkt an ein Siliciumatom eines der Silanmonomere gebunden ist, eine C₁-₂₅-Alkylgruppe, bevorzugt eine C₁-₁₅-Alkylgruppe, weiter bevorzugt eine C₁-₁₀-Alkylgruppe, noch weiter bevorzugt eine C₁-₆-Alkylgruppe, besonders bevorzugt eine C₁-₄-Alkylgruppe und insbesondere bevorzugt eine C₁-₃-Alkylgruppe ist. Bei den vorstehend aufgeführten Alkylgruppen kann es sich um cyclische, verzweigte oder lineare Alkylgruppen handeln, wobei es bevorzugt ist, dass die wenigstens eine Alkylgruppe linear ist. Beispielsweise kann die wenigstens eine Alkylgruppe eine Methylgruppe, Ethylgruppe, n-Propylgruppe, Isopropylgruppe, n-Butylgruppe, sek-Butylgruppe, Isobutylgruppe, tert-Butylgruppe, n-Pentylgruppe, verzweigte Pentylgruppe, Cycyclopentylgruppe, n-Hexylgruppe, verzweigte Hexylgruppe, Cyclohexylgruppe oder eine beliebige Kombination von zwei oder mehr der vorstehend aufgeführten Gruppen sein.

Ganz besonders gute Ergebnisse werden erhalten, wenn die wenigstens eine als Struktureinheit in den wenigstens zwei Silanmonomeren enthaltene Alkylgruppe eine Ethylgruppe oder höchst bevorzugt eine Methylgruppe ist.

Auch in diesem Fall ist es bevorzugt, dass die als Struktureinheit in den wenigstens zwei Silanmonomeren vorgesehene wenigstens eine Alkylgruppe unsubstituiert ist.

Alternativ dazu ist es auch möglich, substituierte Alkylgruppen einzusetzen, wobei als Substituent alle dem Fachmann hierzu bekannten funktionellen Gruppen eingesetzt werden können. Lediglich beispielhaft seien in diesem Zusammenhang als mögliche Substituenten solche genannt, welche aus der Gruppe bestehend aus Hydroxygruppen, Ethergruppen, Aminogruppen, Halogenen und beliebigen Kombinationen von zwei oder mehr der vorstehend genannten funktionellen Gruppen ausgewählt werden.

Auch bezüglich der chemischen Natur der als Struktureinheit eingesetzten wenigstens einen Alkenylgruppe, welche bevorzugt direkt an ein Siliciumatom eines der Silanmonomere gebunden ist, ist die vorliegende Erfindung nicht besonders beschränkt. Beispielsweise kann es sich bei der wenigstens einen Alkenylgruppe um jede beliebige cyclische, verzweigte oder lineare C₂-₂₅-Alkenylgruppe handeln, wobei gute Ergebnisse insbesondere mit einer C₂-₁₅-Alkenylgruppe, weiter bevorzugt mit einer C₂-₁₀-Alkenylgruppe, besonders bevorzugt mit einer C₂-₆-Alkenylgruppe und ganz besonders bevorzugt mit einer C₂-₄-Alkenylgruppe erhalten werden. Höchst bevorzugt ist die wenigstens eine Alkenylgruppe eine Vinylgruppe.

Alle vorstehend aufgeführten Alkenylgruppen können substituiert oder unsubstituiert sein, wobei als Substituenten alle vorstehend in Bezug auf die Alkylgruppen und Arylgruppen genannten Beispiele eingesetzt werden können. Wenn substituierte Alkenylgruppen eingesetzt werden, ist es bevorzugt, dass die wenigstens eine Alkenylgruppe an wenigstens einem Kohlenstoffatom der Doppelbindung mit einem C₁-₂₅-Alkylrest, weiter bevorzugt mit einem C₁-₁₅-Alkylrest, noch weiter bevorzugt mit einem C₁-₁₀-Alkylrest, besonders bevorzugt mit einem C₁-₆-Alkylrest und ganz besonders bevorzugt mit einem C₁-₄-Alkylrest substituiert ist. Beispiele für einen entsprechenden Substituenten sind solche, welche aus der Gruppe bestehend aus Methylresten, Ethylresten, n-Propylresten, Isopropylresten, n-Butylresten, Isobutylresten, sek-Butylresten, tert-Buylresten und beliebigen Kombinationen von zwei oder mehr der vorstehend genannten Alkylreste besteht.

Allerdings ist es ganz besonders bevorzugt, dass die wenigstens eine Alkenylgruppe unsubstituiert ist, und höchst bevorzugt, dass die wenigstens eine Alkenylgruppe eine unsubstituierte Vinylgruppe ist.

Bei den wenigstens drei an ein Siliciumatom eines der Silanmonomere gebundenen Halogenatomen kann es sich um alle beliebigen Halogenatome, d.h. Fluor, Chlor, Brom oder Iod, handeln, wobei die wenigstens drei Halogenatome gleich oder verschieden sein können. Beispielsweise können an ein Siliciumatom eines der Silanmonomere ein Fluoratom, ein Bromatom sowie ein lodatom gebunden sein. Allerdings ist es bevorzugt, dass drei gleiche Halogenatome an ein Siliciumatom eines der Silanmonomere gebunden sind, wobei es ganz besonders bevorzugt ist, dass die wenigstens drei Halogenatome jeweils Chlor sind.

Wie vorstehend dargelegt, ist es bevorzugt, dass als Struktureinheiten unsubstituierte Gruppen eingesetzt werden. Daher wird es in Weiterbildung des Erfindungsgedankens vorgeschlagen, dass wenigstens eine der wenigstens einen Arylgruppe, der wenigstens einen Alkylgruppe und der wenigstens einen Alkenylgruppe, bevorzugt wenigstens zwei der wenigstens einen Arylgruppe, der wenigstens einen Alkylgruppe und der wenigstens einen Alkenylgruppe und besonders bevorzugt alle der wenigstens einen Arylgruppe, der wenigstens einen Alkylgruppe und der wenigstens einen Alkenylgruppe unsubstituiert sind.

Zusätzlich zu den vier vorstehend genannten Struktureinheiten, d.h. zusätzlich zu der wenigstens einen Arylgruppe, zu der wenigstens einen Alkylgruppe, zu der wenigstens einen Alkenylgruppe sowie zu den wenigstens drei an ein Siliciumatom eines der Silanmonomere gebundenen Halogenatomen, kann wenigstens eines der Silanmonomere optional ein oder mehrere direkt an dessen Siliciumatom gebundene(s) Wasserstoffatom(e), d.h. wenigstens eine SiH-Gruppe, aufweisen. Vorzugsweise liegt bei dieser Ausführungsform in den Silanmonomeren nur eine SiH-Gruppe vor. Durch das Vorliegen der SiH-Gruppe(n) wird die Vernetzbarkeit erhöht und somit ein höher vernetztes Polysilan erhalten.

Gemäß einer besonders bevorzugten Ausführungsform der vorliegenden Erfindung werden bei dem Schritt des Reagierens wenigstens drei Silanmonomere eingesetzt, welche die folgenden allgemeinen Formeln (1) bis (3) aufweisen:

(1) R¹SiX₃,

(2) R²R³SiX₂

sowie

(3) R⁴R⁵SiX₂,

worin:
R¹ eine Arylgruppe ist,
R² eine Alkenylgruppe ist,
R³, R⁴, R⁵, gleich oder verschieden, jeweils eine Alkylgruppe oder H, mit der Maßgabe, dass wenigstens einer von R³, R⁴ oder R⁵ eine Alkylgruppe ist, sind sowie
X jeweils ein Halogenatom ist.

Als die in den vorstehenden allgemeinen Formeln genannten Gruppen, d.h. Arylgruppen, Alkenylgruppen, Alkylgruppen und Halogenatome, können diejenigen eingesetzt werden, welche in den vorstehenden Ausführungsformen im Detail genannt sind. Demnach können als Halogenatome alle Halogenatome eingesetzt werden, wobei die einzelnen Halogenatome gleich oder verschieden sein können. Bevorzugt sind alle Halogenatome Chloratome. Bei der Arylgruppe R¹ kann es sich demnach insbesondere um alle substituierten und unsubstituierten C₆-₂₅-Arylgruppen, bevorzugt C₆-₁₈-Arylgruppen, weiter bevorzugt C₆-₁₄-Arylgruppen, besonders bevorzugt C₆-₁₂-Arylgruppen und ganz besonders bevorzugt C₆-₁₀-Arylgruppen handeln. Bevorzugt handelt es sich bei der Arylgruppe R¹ um eine unsubstituierte Arylgruppe und höchst bevorzugt um eine Phenylgruppe. Bei der Alkenylgruppe R² kann es sich demnach insbesondere um alle substituierten und unsubstituierten, cyclischen, verzweigten und linearen C₂-₂₅-Alkenylgruppe, bevorzugt C₂-₁₅-Alkenylgruppen, weiter bevorzugt C₂-₁₀-Alkenylgruppen, besonders bevorzugt C₂-₆-Alkenylgruppen und ganz besonders bevorzugt C₂-₄-Alkenylgruppen handeln. Bevorzugt handelt es sich bei der Alkenylgruppe R² um eine unsubstituierte, lineare Alkenylgruppe und höchst bevorzugt um eine Vinylgruppe. Bei den Alkylgruppen R³, R⁴ und R⁵ kann es sich demnach insbesondere um alle substituierten und unsubstituierten, cyclischen, verzweigten und linearen C₁-₂₅-Alkylgruppen, bevorzugt C₁-₁₅-Alkylgruppen, weiter bevorzugt C₁-₁₀-Alkylgruppen, noch weiter bevorzugt C₁-₆-Alkylgruppen, besonders bevorzugt C₁-₄-Alkylgruppen und insbesondere bevorzugt C₁-₃-Alkylgruppen handeln. Bevorzugt handelt es sich bei den Alkylgruppen R³, R⁴ und R⁵ um eine unsubstituierte, lineare Alkylgruppe, ganz besonders bevorzugt um eine Ethylgruppe und höchst bevorzugt um eine Methylgruppe.

Besonders gute Ergebnisse werden bei der vorstehenden Ausführungsform insbesondere erhalten, wenn die einzelnen Reste in den allgemeinen Formeln (1) bis (3) wie folgt sind:
- R¹ ist eine Phenylgruppe,
- R² ist eine Vinylgruppe,
- jeder von R³, R⁴, R⁵ ist, gleich oder verschieden, eine Alkylgruppe oder H, mit der Maßgabe, dass wenigstens einer von R³, R⁴ oder R⁵ eine Alkylgruppe ist, sowie
- X ist jeweils ein Chloratom.

Bei der vorstehenden Ausführungsform werden als Alkylgruppen R³, R⁴ und R⁵ vorzugsweise C₁-₂₂-Alkylgruppen, insbesondere C₁-₁₂-Alkylgruppen, weiter bevorzugt C₁-₆-Alkylgruppen, noch weiter bevorzugt C₁-₄-Alkylgruppen, besonders bevorzugt C₁-₃-Alkylgruppen, ganz besonders bevorzugt C₁-₄-Alkylgruppen und höchst bevorzugt Methylgruppen eingesetzt. Daher ist es besonders bevorzugt, wenn die einzelnen Reste in den allgemeinen Formeln (1) bis (3) wie folgt sind:
- R¹ ist eine Phenylgruppe,
- R² ist eine Vinylgruppe,
- jeder von R³, R⁴, R⁵ ist, gleich oder verschieden, eine C₁-₂₂-Alkylgruppe, bevorzugt eine C₁-₁₂-Alkylgruppe, weiter bevorzugt eine C₁-₆-Alkylgruppe, noch weiter bevorzugt eine C₁-₄-Alkylgruppe, besonders bevorzugt eine C₁-₃-Alkylgruppe, ganz besonders bevorzugt eine C₁-₄-Alkylgruppe und höchst bevorzugt eine Methylgruppe, sowie
- X ist jeweils ein Chloratom.

Gemäß einer ganz besonders bevorzugten Ausführungsform der vorliegenden Erfindung werden bei dem Schritt des Reagierens als Silanmonomere Phenyltrichlorsilan, Dichlormethylvinylsilan und Dichlordimethylsilan eingesetzt, d.h. drei Silanmonomere gemäß den allgemeinen Formeln (1) bis (3):

(1) R¹SiX₃,

(2) R²R³SiX₂ sowie

(3) R⁴R⁵SiX₂,

worin:
R¹ eine Phenylgruppe ist,
R² eine Vinylgruppe ist,
R³, R⁴, R⁵ jeweils eine Methylgruppe sind sowie
X ein jeweils Chloratom ist.

Die vorstehenden drei Silanmonomere können alleine oder optional zusammen mit einem oder mehreren zusätzlichen Silanmonomeren eingesetzt werden. Allerdings ist es im Hinblick auf das Erreichen einer guten Verarbeitbarkeit des daraus hergestellten Polysilans und das Erreichen eines zumindest nahezu stöchiometrischen Si:C-Verhältnisses nach der Pyrolyse des daraus hergestellten Polysilans bevorzugt, dass bei der Reaktion als Silanmonomere nur die drei vorgenannten Silanmonomere, d.h. Phenyltrichlorsilan, Dichlormethylvinylsilan und Dichlordimethylsilan, eingesetzt werden.

Grundsätzlich können die einzelnen Silanmonomere in der Reaktion in jedem beliebigen Verhältnis miteinander eingesetzt werden. Bei den vorstehenden Ausführungsformen, in denen wenigstens drei Silanmonomere mit den allgemeinen Formeln (1) bis (3) eingesetzt werden, ist es im Hinblick auf das Erreichen einer guten Verarbeitbarkeit des daraus hergestellten Polysilans und das Erreichen eines zumindest nahezu stöchiometrischen Si:C-Verhältnisses nach der Pyrolyse des daraus hergestellten Polysilans bevorzugt, dass bei der Reaktion der Stoffmengenanteil des Silanmonomers mit der allgemeinen Formel (1) 15 bis 30 mol-%, der Stoffmengenanteil des Silanmonomers mit der allgemeinen Formel (2) 5 bis 40 mol-% sowie der Stoffmengenanteil des Silanmonomers mit der allgemeinen Formel (3) 43 bis 66 mol-% bezogen auf die Summe dieser drei Stoffmengen beträgt. Sofern wenigstens eines der Silanmonomere wenigstens eine SiH-Gruppe aufweist, liegt der Anteil dieses Silanmonomers vorzugsweise bei 10 bis 40 mol-%.

Eine besonders gute Verarbeitbarkeit und insbesondere Verspinnbarkeit des hergestellten Polysilans sowie ein Si:C-Verhältniss nach der Pyrolyse des daraus hergestellten Polysilans von besonders nahe an 1 wird überraschenderweise erhalten, wenn bei den vorstehenden Ausführungsformen, in denen wenigstens drei Silanmonomere mit den allgemeinen Formeln (1) bis (3) eingesetzt werden, bei der Reaktion der Stoffmengenanteil des Silanmonomers mit der allgemeinen Formel (1) 16 bis 20 mol-%, der Stoffmengenanteil des Silanmonomers mit der allgemeinen Formel (2) 25 bis 30 mol-% sowie der Stoffmengenanteil des Silanmonomers mit der allgemeinen Formel (3) 53 bis 59 mol-% bezogen auf die Summe dieser drei Stoffmengen beträgt. Sofern wenigstens eines der Silanmonomere wenigstens eine SiH-Gruppe aufweist, liegt der Anteil dieses Silanmonomers vorzugsweise bei 25 bis 30 mol-%.

Als Alkalimetall können bei der Reaktion alle Alkalimetalle eingesetzt werden, wie Lithium, Natrium, Kalium, Rubidium, Cäsium, Francium und beliebige Kombinationen von zwei oder mehr der vorgenannten Metalle. Allerdings ist es bevorzugt, dass bei dem Schritt des Reagierens Natrium, Kalium, eine Mischung aus Natrium und Kalium oder eine Legierung aus Natrium und Kalium eingesetzt wird. Alle vorgenannten Metalle können in flüssiger Form bzw. als Schmelze oder als Feststoff in einem Lösungsmittel suspendiert eingesetzt werden. Allerdings ist es bevorzugt, dass das Alkalimetall in flüssiger Form bzw. als Schmelze eingesetzt wird, wobei die Schmelze vorzugsweise in einem organischen Lösungsmittel durch eine geeignete Rühreinrichtung, wie beispielsweise einen Paddelrührer, fein dispergiert wird. Bei dieser Ausführungsform lässt sich eine besonders homogene Emulsion erhalten, welche gegenüber einer heterogeneren Suspension bevorzugt ist. Dabei ist es besonders bevorzugt, dass als Alkalimetall Natrium, eine Mischung aus Natrium und Kalium oder eine Legierung aus Natrium und Kalium eingesetzt wird.

Ein Vorteil bei der Verwendung einer Mischung bzw. Legierung aus Natrium und Kalium liegt darin, dass der Zusatz des Kaliums den Schmelzpunkt des Natriums verringert, und zwar bei entsprechender Menge an zugesetztem Kalium auf unterhalb der Raumtemperatur. Daher ermöglicht der Einsatz einer Mischung oder Legierung aus Natrium und Kalium den Einsatz von flüssigem Alkalimetall bereits bei Raumtemperatur. Bei dieser Ausführungsform ist es bevorzugt, dass die Mischung bzw. Legierung nur so wenig Kalium enthält, wie dies zur Verringerung des Schmelzpunktes von Natrium auf einen gewünschten Wert erforderlich ist, da Kalium im Gegensatz zu Natrium bei der Reaktion zu unerwünschten Nebenreaktionen mit der Doppelbindung der Alkenylgruppe führt.

Besonders bevorzugt wird bei der Reaktion als Alkalimetall ausschließlich Natrium eingesetzt.

Vorzugsweise beträgt die Menge des Alkalimetalls, bezogen auf die Menge an Halogenatomen der Silanmonomere, bei dem Schritt des Reagierens 0,9 bis 1,5 und besonders bevorzugt 1,0 bis 1,5.

In Weiterbildung des Erfindungsgedankens wird es vorgeschlagen, den Schritt des Reagierens in wenigstens einem organischen Lösungsmittel durchzuführen, wobei das wenigstens eine organische Lösungsmittel bevorzugt aus der Gruppe bestehend aus Diethylether, Tetrahydrofuran, 1,4-Dioxan, Benzol, Toluol, Xylol und beliebigen Kombinationen von zwei oder mehr der vorstehend genannten Komponenten ausgewählt wird. Besonders geeignet sind Tetrahydrofuran und Toluol und ganz besonders bevorzugt ist eine Mischung aus Tetrahydrofuran und Toluol.

Grundsätzlich kann der Schritt des Reagierens bei jeder beliebigen Temperatur durchgeführt werden, bei der eine hinreichend hohe Reaktionsgeschwindigkeit vorliegt. Allerdings ist es aus den vorstehenden Gründen bevorzugt, nämlich zwecks Erreichen einer besonders homogenen Dispersion von Alkalimetall in dem die Silanmonomere enthaltenden Lösungsmittel, dass die Reaktion bei einer Temperatur durchgeführt wird, bei welcher das Alkalimetall als Schmelze vorliegt. Im Falle von Natrium liegt die Reaktionstemperatur daher bevorzugt bei mindestens 97,7 °C und im Falle von Kalium bevorzugt bei mindestens 63,4 °C. Sofern eine Mischung bzw. Legierung von Natrium und Kalium eingesetzt wird, kann die Reaktionstemperatur infolge der Schmelzpunkterniedrigung entsprechend herabgesetzt werden. In Abhängigkeit von dem konkret eingesetzten Alkalimetall kann der Schritt des Reagierens daher bei einer Temperatur von 0 bis 200 °C, bevorzugt von 20 bis 180 °C, weiter bevorzugt von 60 bis 160 °C, besonders bevorzugt von 80 bis 160 °C, ganz besonders bevorzugt von 90 bis 140 °C und höchstbevorzugt von 98 bis 120 °C durchgeführt werden.

Um Nebenreaktionen und insbesondere Oxidationsreaktionen soweit wie möglich zu unterbinden, wird es in Weiterbildung des Erfindungsgedankens vorgeschlagen, die Reaktion unter Inertgas, wie Stickstoff oder Argon, durchzuführen.

Nach der Reaktion werden die ungelösten Bestandteile, welche unter anderem unreagiertes Alkalimetall enthalten, durch Filtration abgetrennt, so dass das Zielpolysilan in dem Filtrat erhalten wird und daraus durch Verdampfen des Lösungsmittels isoliert werden kann. Aufgrund der hohen Ausbeute an löslichem Polysilan weist das erfindungsgemäße Verfahren eine hohe Reaktionsausbeute auf.

Ein weiterer Gegenstand der vorliegenden Patentanmeldung ist ein Polysilan, weiches mit dem zuvor beschriebenen Verfahren erhältlich ist, wobei dieses 0,01 bis 0,98 Alkylgruppen, 0,01 bis 0,96 Alkenylgruppen und 0,01 bis 0,20 Arylgruppen, bevorzugt 0,50 bis 0,98 Alkylgruppen, 0,01 bis 0,30 Alkenylgruppen und 0,01 bis 0,20 Arylgruppen, besonders bevorzugt 0,77 bis 0,96 Alkylgruppen, 0,02 bis 0,11 Alkenylgruppen und 0,02 bis 0,12 Arylgruppen und ganz besonders bevorzugt 0,84 bis 0,92 Alkylgruppen, 0,05 bis 0,11 Alkenylgruppen und 0,02 bis 0,06 Arylgruppen, bezogen darauf, dass die Summe dieser Gruppen 1,00 beträgt, aufweist. Ein solches Polysilan zeichnet sich durch eine vergleichsweise hohe Molmasse aus und ist zudem überraschenderweise zu SiC mit einem nahezu stöchiometrischen Si:C-Verhältnis pyrolysierbar.

Gemäß einer bevorzugten Ausführungsform der vorliegenden Erfindung weist das erfindungsgemäße Polysilan, darauf umgerechnet, dass die Summe der nachstehend genannten Gruppen im Polysilan insgesamt 1,00 beträgt, 0,01 bis 0,98 Alkylgruppen, 0,01 bis 0,96 Alkenylgruppen und 0,01 bis 0,20 Arylgruppen auf. Besonders bevorzugt weist das Polysilan 0,50 bis 0,98 Alkylgruppen, 0,01 bis 0,30 Alkenylgruppen und 0,01 bis 0,20 Arylgruppen auf. Besonders gute Ergebnisse, insbesondere hinsichtlich der zu erzielenden Stöchiometrie zwischen Silicium und Kohlenstoff nach der Pyrolyse zu SiC, werden erhalten, wenn das Polysilan 0,77 bis 0,96 Alkylgruppen, 0,02 bis 0,11 Alkenylgruppen und 0,02 bis 0,12 Arylgruppen aufweist und insbesondere, wenn das Polysilan 0,84 bis 0,92 Alkylgruppen, 0,05 bis 0,11 Alkenylgruppen und 0,02 bis 0,06 Arylgruppen aufweist.

Da, wie vorstehend in Bezug auf das Verfahren dargelegt, die Alkylgruppen bevorzugt Methylgruppen sind, die Alkenylgruppen bevorzugt Vinylgruppen sind und die Arylgruppen bevorzugt Phenylgruppen sind, ist es besonders bevorzugt, dass das erfindungsgemäße Polysilan, 0,01 bis 0,98 Methylgruppen, 0,01 bis 0,96 Vinylgruppen und 0,01 bis 0,20 Phenylgruppen als Substituenten aufweist. Ganz besonders bevorzugt weist das Polysilan 0,50 bis 0,98 Methylgruppen, 0,01 bis 0,30 Vinylgruppen und 0,01 bis 0,20 Phenylgruppen auf. Noch weiter bevorzugt weist das Polysilan 0,77 bis 0,96 Methylgruppen, 0,02 bis 0,11 Vinylgruppen und 0,02 bis 0,12 Phenylgruppen auf und am meisten bevorzugt weist das Polysilan 0,84 bis 0,92 Methylgruppen, 0,05 bis 0,11 Vinylgruppen und 0,02 bis 0,06 Phenylgruppen auf. Diese Zahlenwerte beziehen sich, wie bereits im vorherigen Absatz beschrieben, darauf, dass die Gesamtanzahl der vorstehend genannten Substituenten 1,00 beträgt. Diese Zahlengeben also das molare Verhältnis der genannten Substituenten untereinander wieder. Diese relative Anzahl der Substituenten im erfindungsgemäßen Polysilan lässt sich beispielsweise mittels ¹H-NMR Spektroskopie leicht ermitteln. Dabei wird aus dem Verhältnis der unterschiedlichen Wasserstoffsignale das Verhältnis der unterschiedlichen Substituenten zueinander errechnet, wodurch sich der molare Anteil der jeweiligen Substituenten ergibt.

Vorzugsweise weist das erfindungsgemäße Polysilan eine zahlengemittelte Molmasse Mn von 600 bis 4.000 g/mol, weiter bevorzugt von 700 bis 2.000 g/mol, besonders bevorzugt von 800 bis 1 .500 g/mol und ganz besonders bevorzugt von 900 bis 1 .200 g/mol auf. Gemäß der vorliegenden Erfindung wird die zahlengemittelte Molmasse mit GPC ermittelt, und zwar gemäß der DIN 55672.

Durch Pyrolyse des erfindungsgemäßen kann ein Formkörper aus Siliciumcarbid hergestellt werden. Ein solches Siliciumcarbid zeichnet sich durch ein nahezu stöchiometrisches Si:C-Verhältnis, also durch einen niedrigen Gehalt an freiem Kohlenstoff, aus. Bei dem Formkörper kann es sich um eine Faser, um Matrixmaterial oder dergleichen handeln.

Grundsätzlich kann die Pyrolyse auf alle dem Fachmann bekannten Weisen und mit jedem Temperaturprofil durchgeführt werden. Gute Ergebnisse werden dabei jedoch insbesondere erhalten, wenn die Pyrolyse unter Sauerstoffausschluss, also in einer Intergasatmosphäre, wie Stickstoff, so durchgeführt wird, dass die Maximaltemperatur 400 bis 1200 °C, bevorzugt 600 bis 1000 °C und besonders bevorzugt 800 bis 900 °C beträgt.

Optional kann das Polysilan vor der Pyrolyse gehärtet werden, wobei das Härten beispielsweise mit UV-Licht und/oder Temperaturbehandlung, welche Teil der Pyrolyse sein kann, durchgeführt werden kann.

In Weiterbildung des Erfindungsgedankens wird es vorgeschlagen, bei der Pyrolyse die Aufheizrate auf einen Wert zwischen 0,1 und 200 K Min., bevorzugt zwischen 0,5 und 50 K Min., besonders bevorzugt zwischen 0,75 und 10 K Min. und ganz besonders bevorzugt auf einen Wert von etwa 1,0 K Min. einzustellen. Bei 400 bis 500 °C wird die Umwandlung des Polysilans zu dem SiC abgeschlossen. Allerdings ist die Behandlung bei einer höheren Temperatur notwendig, um die gewünschte Gefügeausbildung zu erreichen.

Wie vorstehend dargelegt, zeichnet sich das Siliciumcarbid des Formkörpers durch ein nahezu stöchiometrisches Si:C-Verhältnis, also durch einen niedrigen Gehalt an freiem Kohlenstoff, aus. Vorzugsweise beträgt das Verhältnis der Stoffmengen von Silicium zu Kohlenstoff in dem Siliciumcarbid 0,75 bis 1,25, weiter bevorzugt 0,8 bis 1,20, besonders bevorzugt 0,85 bis 1,15, ganz besonders bevorzugt 0,9 bis 1,0 und höchst bevorzugt 0,95 bis 1,0. Gemäß der vorliegenden Erfindung erfolgt die Bestimmung des Stoffmengenverhältnisses von Silicium zu Kohlenstoff durch Elementaranalyse. Dabei erfolgt die Bestimmung des Kohlenstoffgehaltes gemäß der vorliegenden Erfindung nach dem Prinzip der Probenverbrennung und der Analyse der Verbrennungsgase mittels Infrarotabsorption. Dabei wird die zu analysierende Probe in einem Hochfrequenz-Ofen induktiv auf Temperaturen zwischen 1250 °C und 1400 °C erhitzt und durch Sauerstoffzufuhr verbrannt, wobei das entstandene CO2 durch eine Infrarot-Zelle geleitet wird. Über die Stärke der Absorption der dazugehörigen Bande kann auf die Menge geschlossen werden. Auch die Bestimmung des Sauerstoffgehaltes erfolgt nach dem Prinzip der Probenverbrennung und der Analyse der Verbrennungsgase mittels Infrarotabsorption. Als Trägergas wird dabei Helium verwendet. Die zu analysierende Probe wird in einem Hochfrequenz-Ofen induktiv auf Temperaturen zwischen 1250 °C und 1400 °C erhitzt, wobei der in der Probe enthaltene Sauerstoff mit dem Graphittiegel reagiert, in dem sich die Probe befindet, und das entstandene CO2 und CO wird durch eine Infrarot-Zelle geleitet. Über die Stärke der Absorption der dazugehörigen Bande kann auf die Menge geschlossen werden. Da sich in der Probe keine weiteren Elemente befinden, kann der Siliciumgehalt durch Differenzbildung aus den vorher erhaltenen Kohlenstoff- und Sauerstoffwerten, bezogen auf 100 %, erhalten werden.

Gemäß einer bevorzugten Ausführungsform handelt es sich bei dem Formkörper um eine Siliciumcarbidfaser. Bei dieser Ausführungsform ist es bevorzugt, dass die Faser(n) einen Durchmesser von 1 bis 100 µm, bevorzugt von 5 bis 50 µm, besonders bevorzugt von 10 bis 20 µm und ganz besonders bevorzugt von 10 bis 15 m aufweist/aufweisen. Diese Fasern sind einfach durch Verspinnen und anschließende Pyrolyse des vorstehend beschriebenen erfindungsgemäßen Polysilans erhältlich. Dabei kann das Spinnen mit einer Schmelze des Polysilans oder mit einer das Polysilan enthaltenden Lösung erfolgen. Im letztgenannten Fall kann als Lösungsmittel beispielsweise Tetrahydrofuran, Xylol und/oder Toluol eingesetzt werden.

Insbesondere in dem Fall, dass der Formkörper eine SiC-Faser ist, ist es bevorzugt, dass dieser einen Kristallisationsgrad von 20 bis 80 %, besonders bevorzugt von 40 bis 70 % und ganz besonders bevorzugt von 50 bis 60 % aufweist. Allerdings ist es auch möglich, dass der Formkörper vollständig amorph ist oder vollständig kristallin ist, so dass erfindungsgemäß Kristallisationsgrade von 0 bis 100 % möglich sind.

Gemäß einer weiteren bevorzugten Ausführungsform liegt die Korngröße des SiC des Formkörpers in einem Bereich von 0 bis 20 µm, bevorzugt von 0,01 bis 15 µm, besonders bevorzugt von 0,03 bis 10 µm, ganz besonders bevorzugt von 0,05 bis 5 µm und höchst bevorzugt von 0,1 bis 2 µm.

Schließlich kann die SiC-Faser, wie grundsätzlich bekannt, mit Schlichte versehen sein.

Ein weiterer Gegenstand der vorliegenden Erfindung ist ein Verfahren zur Herstellung eines Faserverbundwerkstoff, welcher Fasern aus Siliciumcarbid und eine Matrix aus Siliciumcarbid enthält, wobei das Verfahren das Verspinnen und anschließende Pyrolyse eines vorstehend beschriebenen erfindungsgemäßen Polysilans zu Fasern aus Siliciumcarbid, das Imprägnieren der Fasern mit Polysilan und anschließende Pyrolyse umfasst.

Ferner können die Fasern in Form von Gelegen, Fasermatten, Geweben, Gewirken, Gestricken, Vliesen und/oder Filzen vorliegen, wobei Gelege und/oder Fasermatten bevorzugt sind.

Zur Herstellung des erfindungsgemäßen Verbundwerkstoffs werden, wie vorstehend beschrieben, wie vorstehend hergestellte SiC-Fasern enthaltende Faserstrukturen mit Polysilan imprägniert und anschließend wie vorstehend beschrieben pyrolysiert. Optional kann zwischen dem Imprägnieren und dem Pyrolysieren eine Härtung durchgeführt werden, wobei das Härten beispielsweise mit UV-Licht und/oder durch Temperaturbehandlung erfolgen kann. Danach kann der so hergestellte Körper ein- oder mehrmals mit Polysilan imprägniert, gehärtet und pyrolysiert werden.

Aufgrund seiner hervorragenden Eigenschaften, insbesondere seiner hervorragenden Hochtemperaturbeständigkeit und hohen Härte, eignet sich der erfindungsgemäß hergestellte Faserverbundwerkstoff insbesondere für Anwendungen, in denen das Material hohen Temperaturen und oxidativen Bedingungen ausgesetzt sind, und zwar beispielsweise im Leichtbau, in der Elektroindustrie, in der Raumfahrt, im Kraftfahrzeugbau und im Flugzeugbau. Aufgrund des kostengünstigeren Herstellungsverfahrens der vorliegenden Erfindung ist insbesondere die Verwendung des Faserverbundwerkstoffs als Material für Kupplungs- oder Bremsscheiben bevorzugt.

Nachfolgend wird die vorliegende Erfindung anhand von Ausführungsbeispielen beschrieben, welche die vorliegende Erfindung erläutern, aber nicht beschränken.

### Beispiel 1

Eine Apparatur zur Durchführung chemischer Synthesen unter Verwendung der Standard-Schlenk-Technik, welche einen Dreihalskolben mit einem Rückflusskühler, einem Tropftrichter mit Druckausgleich und einem KPG-Rührer umfasste, wurde evakuiert und mit Argon gefüllt. In dem Dreihalskolben wurde bei Raumtemperatur unter Argonatmosphäre eine Mischung von 102 ml Tetrahydrofuran, 610 ml Toluol und 112,4 g Natrium vorgelegt. Der Tropftrichter wurde, ebenfalls unter Argonatmosphäre, mit 57 ml Phenyltrichlorsilan, 76 ml Dichlormethylvinylsilan und 152 ml Dichlordimethylsilan beschickt. Die Rührgeschwindigkeit wurde auf 250 Umdrehungen pro Minute eingestellt und die in dem Dreihalskolben vorgelegte Mischung mit Hilfe eines Ölbades auf eine Temperatur von ungefähr 100 °C erhitzt. Dabei wurde eine Emulsion von geschmolzenem Natrium in Tetrahydrofuran und Toluol gebildet. Zu dieser Emulsion wurde bei 100 °C das Gemisch der Silane aus dem Tropftrichter mit einer Zutropfgeschwindigkeit von 5,7 ml/min über einen Zeitraum von ungefähr 50 Min. hinzugegeben, wobei das Einsetzen der Reaktion durch eine Blaufärbung angezeigt wurde. Nach beendeter Zugabe wurde die Reaktionsmischung noch 2 Std. bei 100 °C gerührt, bevor man auf Raumtemperatur abkühlen ließ. Die erhaltene Suspension wurde mit Hilfe einer Schutzgasfritte mit einer Porengröße von 10 µm unter einer Argonatmosphäre filtriert, wobei auf der Fritte ein Rückstand von Natriumchlorid, unreagiertem Natrium und dem unlöslichen Anteil des bei der Reaktion gebildeten Polysilans zurückblieb, welcher mit 160 ml Toluol nachgewaschen wurde. In dem erhaltenen Filtrat befand sich der lösliche Anteil des gebildeten Polysilans, von dem die Lösungsmittel zügig im Vakuum entfernt wurden, woraufhin der lösliche Anteil des Polysilans in einer Ausbeute von 81 % erhalten wurde. Die zahlengemittelte Molmasse Mn wurde mittels Gelpermeationschromatographie zu 1.110 g/mol bestimmt.

Eine NMR-Bestimmung ergab, dass das erhaltene Polysilan folgende relative Mengen an Seitenkettengruppen aufwies:
- 88,8 Mol.-% Methylgruppen,
- 8,0 Mol.-% Vinylgruppen und
- 3,2 Mol.-% Phenylgruppen.

Das erhaltene Polysilan wurde in Tetrahydrofuran gelöst und aus der Lösung zu einer Faser mit einem Durchmesser von durchschnittlich 35 µm versponnen. Anschließend wurde die erhaltene Faser bei Raumtemperatur unter Argonstrom getrocknet und einer Pyrolyse unterzogen. Dazu wurde die Faser in einem Ofen platziert und mit einer Aufheizrate von 1 K/min auf eine Temperatur von 150 °C erhitzt. Die Temperatur von 150 °C wurde für eine Zeitspanne von 30 Min. gehalten. Ein weiteres Aufheizen auf eine Temperatur von 800 °C erfolgte mit einer Aufheizrate von 5 K/min. Die Haltezeit bei 800 °C betrug 0 Min., bevor mit einer Abkühlrate von 10 K/min auf Raumtemperatur abgekühlt wurde. Es wurde eine Siliciumcarbidfaser mit einem Durchmesser von durchschnittlich 15 µm sowie mit einem durch Elementaranalyse bestimmten Stoffmengenverhältnis von Silicium zu Kohlenstoff von 0,92 erhalten.

### Beispiel 2

Ein Polysilan wurde wie in dem Beispiel 1 beschrieben hergestellt, ausgenommen, dass 95 ml Phenyltrichlorsilan, 19 ml Dichlormethylvinylsilan und 171 ml Dichlordimethylsilan eingesetzt wurden. Der lösliche Anteil des Polysilans wurde in einer Ausbeute von 84 % erhalten. Die mittels Gelpermeationschromatographie ermittelte zahlengemittelte Molmasse Mn betrug 969 g/mol.

Das erhaltene Polysilan wurde wie im Beispiel 1 beschrieben zu einer Faser versponnen und pyrolysiert. Die erhaltene Siliciumcarbidfaser wies ein durch Elementaranalyse bestimmtes Stoffmengenverhältnis von Silicium zu Kohlenstoff von 0,85 auf.

### Beispiel 3

Ein Polysilan wurde wie in dem Beispiel 1 beschrieben hergestellt, ausgenommen, dass 58,4 ml Phenyltrichlorsilan, 79,8 ml Dichlormethylvinylsilan und 146,8 ml Dichlordimethylsilan eingesetzt wurden. Der lösliche Anteil des Polysilans wurde in einer Ausbeute von 76 % erhalten. Die mittels Gelpermeationschromatographie ermittelte zahlengemittelte Molmasse Mn betrug 1570 g/mol.

Das erhaltene Polysilan wurde ebenfalls wie im Beispiel 1 beschrieben zu einer Faser versponnen und pyrolysiert. Die erhaltene Siliciumcarbidfaser wies ein durch Elementaranalyse bestimmtes Stoffmengenverhältnis von Silicium zu Kohlenstoff von 0,96 auf.

### Vergleichsbeispiel 1

Ein Polysilan wurde wie in dem Beispiel 1 beschrieben hergestellt, ausgenommen, dass 114 ml Phenyltrichlorsilan und 171 ml Dichlordimethylsilan eingesetzt wurden. Der lösliche Anteil des Polysilans wurde in einer Ausbeute von 90 % erhalten. Die mittels Gelpermeationschromatographie ermittelte zahlengemittelte Molmasse Mn betrug 941 g/mol.

Das erhaltene Siliciumcarbid wies ein durch Elementaranalyse bestimmtes Stoffmengenverhältnis von Silicium zu Kohlenstoff von 0,48 auf.

### Vergleichsbeispiel 2

Ein Polysilan wurde wie in dem Beispiel 1 beschrieben hergestellt, ausgenommen, dass 285 ml Dichlormethylvinylsilan eingesetzt wurden. Der lösliche Anteil des Polysilans wurde in einer Ausbeute von 46 % erhalten. Die mittels Gelpermeationschromatographie ermittelte zahlengemittelte Molmasse Mn betrug 1.030 g/mol. Das erhaltene Polysilan konnte nicht wie in dem Beispiel 1 beschrieben zu einer Faser versponnen werden. Das erhaltene Siliciumcarbid wies ein durch Elementaranalyse bestimmtes Stoffmengenverhältnis von Silicium zu Kohlenstoff von 0,97 auf.

### Vergleichsbeispiel 3

Ein Polysilan wurde wie in dem Beispiel 1 beschrieben hergestellt, ausgenommen, dass 285 ml Phenyltrichlorsilan eingesetzt wurden. Der lösliche Anteil des Polysilans wurde in einer Ausbeute von 100 % erhalten. Die mittels Gelpermeationschromatographie ermittelte zahlengemittelte Molmasse Mn betrug 1.720 g/mol.

Das erhaltene Polysilan wurde wie in dem Beispiel 1 beschrieben zu einer Faser versponnen. Hierzu wurde die Faser in einem Ofen platziert und mit einer Aufheizrate von 1 K/min auf eine Temperatur von 300 °C erhitzt, welche für eine Zeitspanne von 180 Min. gehalten wurde. Ein weiteres Aufheizen auf eine Temperatur von 800 °C erfolgte mit einer Aufheizrate von 5 K/min. Die Haltezeit bei 800 °C betrug 0 Min., bevor mit einer Abkühlrate von 10 K/min auf Raumtemperatur abgekühlt wurde.

Die erhaltene Siliciumcarbidfaser wies einen Durchmesser von 13,3 µm und ein durch Elementaranalyse bestimmtes Stoffmengenverhältnis von Silicium zu Kohlenstoff von 0,36 auf.

### Vergleichsbeispiel 4

Ein Polysilan wurde wie in dem Beispiel 1 beschrieben hergestellt, ausgenommen, dass 285 ml Dichlordimethylsilan eingesetzt wurden. Der lösliche Anteil des Polysilans wurde in einer Ausbeute von 87 % erhalten. Mittels Gelpermeationschromatographie konnten keine Werte ermittelt werden, da das Polysilan nicht mehr in Tetrahydrofuran aufgenommen werden konnte.

Das erhaltene Polysilan konnte weder versponnen noch pyrolysiert werden.

## Patentansprüche

1. Verfahren zur Herstellung eines Polysilans umfassend den Schritt des Reagierens von (i) wenigstens zwei Silanmonomeren und (ii) wenigstens einem Alkalimetall, wobei die Silanmonomere die folgenden Struktureinheiten enthalten:
wenigstens eine Arylgruppe,
wenigstens eine Alkylgruppe,
wenigstens eine Alkenylgruppe sowie
wenigstens drei Halogenatome, wobei wenigstens drei der Halogenatome an ein Siliciumatom eines der Silanmonomere gebunden sind.

2. Verfahren nach Anspruch 1,
**dadurch gekennzeichnet, dass**
die wenigstens eine Arylgruppe eine C₆₋₂₅-Arylgruppe, bevorzugt eine C₆₋₁₈-Arylgruppe, weiter bevorzugt eine C₆₋₁₄-Arylgruppe, besonders bevorzugt eine C₆₋₁₂-Arylgruppe, ganz besonders bevorzugt eine C₆₋₁₀-Arylgruppe und höchst bevorzugt eine Phenylgruppe ist.

3. Verfahren nach Anspruch 1 oder 2,
**dadurch gekennzeichnet, dass**
die wenigstens eine Alkylgruppe eine C₁₋₂₅-Alkylgruppe, bevorzugt eine C₁₋₁₅-Alkylgruppe, weiter bevorzugt eine C₁₋₁₀-Alkylgruppe, noch weiter bevorzugt eine C₁₋₆-Alkylgruppe, besonders bevorzugt eine C₁₋₄-Alkylgruppe, insbesondere bevorzugt eine C₁₋₃-Alkylgruppe, ganz besonders bevorzugt eine C₁₋₂-Alkylgruppe und höchst bevorzugt eine Methylgruppe ist.

4. Verfahren nach zumindest einem der vorstehenden Ansprüche,
**dadurch gekennzeichnet, dass**
die wenigstens eine Alkenylgruppe eine C₂₋₂₅-Alkenylgruppe, bevorzugt eine C₂₋₁₅-Alkenylgruppe, weiter bevorzugt eine C₂₋₁₀-Alkenylgruppe, besonders bevorzugt eine C₂₋₆-Alkenylgruppe, ganz besonders bevorzugt eine C₂₋₄-Alkenylgruppe und höchst bevorzugt eine Vinylgruppe ist.

5. Verfahren nach zumindest einem der vorstehenden Ansprüche,
**dadurch gekennzeichnet, dass**
die wenigstens drei Halogenatome jeweils Chlor sind.

6. Verfahren nach zumindest einem der vorstehenden Ansprüche,
**dadurch gekennzeichnet, dass**
wenigstens eine der wenigstens einen Arylgruppe, der wenigstens einen Alkylgruppe und der wenigstens einen Alkenylgruppe, bevorzugt wenigstens zwei der wenigstens einen Arylgruppe, der wenigstens einen Alkylgruppe und der wenigstens einen Alkenylgruppe und besonders bevorzugt alle der wenigstens einen Arylgruppe, der wenigstens einen Alkylgruppe und der wenigstens einen Alkenylgruppe unsubstituiert sind.

7. Verfahren nach zumindest einem der vorstehenden Ansprüche,
**dadurch gekennzeichnet, dass**
bei dem Schritt des Reagierens drei Silanmonomere eingesetzt werden, welche die folgenden allgemeinen Formeln (1) bis (3) aufweisen:
R¹SiX₃
R²R³SiX₂
R⁴R⁵SiX₂
worin:
R¹ eine Arylgruppe ist,
R² eine Alkenylgruppe ist,
R³, R⁴, R⁵, gleich oder verschieden, eine Alkylgruppe oder H, mit der Maßgabe, dass wenigstens einer von R³, R⁴ oder R⁵ eine Alkylgruppe ist, sind sowie X jeweils ein Halogenatom ist.

8. Verfahren nach Anspruch 7,
**dadurch gekennzeichnet, dass**
als Silanmonomere Phenyltrichlorsilan, Dichlormethylvinylsilan und Dichlordimethylsilan eingesetzt werden.

9. Verfahren nach Anspruch 7 oder 8,
**dadurch gekennzeichnet, dass**
der Stoffmengenanteil des Silanmonomers mit der allgemeinen Formel (1) 15 bis 30 mol-%, der Stoffmengenanteil des Silanmonomers mit der allgemeinen Formel (2) 5 bis 40 mol-% sowie der Stoffmengenanteil des Silanmonomers mit der allgemeinen Formel (3) 43 bis 66 mol-% bezogen auf die Summe dieser drei Stoffmengen beträgt.

10. Polysilan erhältlich nach einem Verfahren nach zumindest einem der vorstehenden Ansprüche,
**dadurch gekennzeichnet, dass**
dieses 0,01 bis 0,98 Alkylgruppen, 0,01 bis 0,96 Alkenylgruppen und 0,01 bis 0,20 Arylgruppen, bevorzugt 0,50 bis 0,98 Alkylgruppen, 0,01 bis 0,30 Alkenylgruppen und 0,01 bis 0,20 Arylgruppen, besonders bevorzugt 0,77 bis 0,96 Alkylgruppen, 0,02 bis 0,11 Alkenylgruppen und 0,02 bis 0,12 Arylgruppen und ganz besonders bevorzugt 0,84 bis 0,92 Alkylgruppen, 0,05 bis 0,11 Alkenylgruppen und 0,02 bis 0,06 Arylgruppen, bezogen darauf, dass die Summe dieser Gruppen 1,00 beträgt, aufweist.

11. Verfahren zur Herstellung eines Faserverbundwerkstoff, welcher Fasern aus Siliciumcarbid und eine Matrix aus Siliciumcarbid enthält, wobei das Verfahren zur Herstellung eines Polysilans nach Ansprüchen 1-9, das Verspinnen und anschließende Pyrolyse des Polysilans zu Fasern aus Siliciumcarbid, das Imprägnieren der Fasern mit Polysilan und anschließende Pyrolyse umfasst.

## Claims

1. A method for producing a polysilane, comprising the step of regenerating (i) at least two silane monomers and (ii) at least one alkali metal, wherein the silane monomers contain the following structural units:
at least one aryl group,
at least one alkyl group,
at least one alkenyl group as well as
at least three halogen atoms, wherein at least three of the halogen atoms are bound to a silicon atom of one of the silane monomers.

2. The method according to claim 1,
**characterized in that**
the at least one aryl group is a C₆₋₂₅ aryl group, preferably a C₆₋₁₈ aryl group, more preferably a C₆₋₁₄ aryl group, especially preferably a C₆₋₁₂ aryl group, most especially preferably a C₆₋₁₀ aryl group, and most preferably a phenyl group.

3. The method according to claim 1 or 2,
**characterized in that**
the at least one alkyl group is a C₁₋₂₅ alkyl group, preferably a C₁₋₁₅ alkyl group, more preferably a C₁₋₁₀ alkyl group, even more preferably a C₁₋₆ alkyl group, especially preferably a C₁₋₄ alkyl group, in particular preferably a C₁₋₃ alkyl group, most especially preferably a C₁₋₂ alkyl group, and most preferably a methyl group.

4. The method according to at least one of the preceding claims,
**characterized in that**
the at least one alkenyl group is a C₂₋₂₅ alkenyl group, preferably a C₂₋₁₅ alkenyl group, more preferably a C₂₋₁₀ alkenyl group, especially preferably a C₂₋₆ alkenyl group, most especially preferably a C₂₋₄ alkenyl group and most preferably a vinyl group.

5. The method according to at least one of the preceding claims,
**characterized in that**
the at least three halogen atoms are each chlorine.

6. The method according to at least one of the preceding claims,
**characterized in that**
at least one of the at least one aryl group, the at least one alkyl group and the at least one alkenyl group, preferably at least two of the at least one aryl group, the at least one alkyl group and the at least one alkenyl group, and especially preferably all of the at least one aryl group, the at least one alkyl group and the at least one alkenyl group are unsubstituted.

7. The method according to at least one of the preceding claims,
**characterized in that**
three silane monomers having the following general formulas (1) to (3) are used in the regeneration step:
R¹SiX₃
R²R³SiX₂
R⁴R⁵SiX₂
where:
R¹ is an aryl group,
R² is an alkenyl group,
R³, R⁴, R⁵ may be the same or different and denote an alkyl group or H, with the provision that at least one of R³, R⁴ or R⁵ is an alkyl group, and each X is a halogen atom.

8. The method according to claim 7,
**characterized in that**
phenyltrichlorosilane, dichloromethylvinylsilane and dichlorodimethylsilane are used as the silane monomers.

9. The method according to claim 7 or 8,
**characterized in that**
the proportional amount of the silane monomer having general formula (1) is 15 to 30 mol%, the proportional amount of silane monomer having general formula (2) is 5 to 40 mol% and the proportional amount of the silane monomer having general formula (3) is 43 to 66 mol%, each based on the total of these three amounts.

10. A polysilane obtainable by a method according to at least one of the preceding claims,
**characterized in that**
it contains 0.01 to 0.98 alkyl groups, 0.01 to 0.96 alkenyl groups and 0.01 to 0.20 aryl groups, preferably 0.50 to 0.98 alkyl groups, 0.01 to 0.30 alkenyl groups and 0.01 to 0.20 aryl groups, especially preferably 0.77 to 0.96 alkyl groups, 0.02 to 0.11 alkenyl groups and 0.02 to 0.12 aryl groups, and most especially preferably 0.84 to 0.92 alkyl groups, 0.05 to 0.11 alkenyl groups and 0.02 to 0.06 aryl groups, based on the fact that the total of these groups amounts to 1.00.

11. The method for producing a fiber composite material which contains fibers of silicon carbide and a matrix of silicon carbide, wherein the method for producing a polysilane according to claims 1 to 9 comprises spinning and then pyrolysis of the polysilane to form fibers of silicon carbide, impregnation of the fibers with polysilane and then pyrolysis.

## Revendications

1. Procédé de préparation d'un polysilane comprenant l'étape consistant à faire réagir (i) au moins deux monomères silane et (ii) au moins un métal alcalin, les monomères silanes contenant les motifs structuraux suivants :
au moins un groupe aryle,
au moins un groupe alkyle,
au moins un groupe alcényle et
au moins trois atomes d'halogène, au moins trois des atomes d'halogène étant liés à un atome de silicium d'un des monomères silane.

2. Procédé selon la revendication 1,
**caractérisé en ce que**
l'au moins un groupe aryle est un groupe aryle en C₆₋₂₅, de préférence un groupe aryle en C₆₋₁₈, de manière davantage préférée un groupe aryle en C₆₋₁₄, de manière particulièrement préférée un groupe aryle en C₆₋₁₂, de manière tout particulièrement préférée un groupe aryle en C₆₋₁₀ et de manière préférée entre toutes un groupe phényle.

3. Procédé selon les revendications 1 ou 2,
**caractérisé en ce que**
l'au moins un groupe alkyle est un groupe alkyle en C₁₋₂₅, de préférence un groupe alkyle en C₁₋₁₅, de manière davantage préférée un groupe alkyle en C₁₋₁₀, de manière encore davantage préférée un groupe alkyle en C₁₋₆, de manière particulièrement préférée un groupe alkyle en C₁₋₄, de manière particulièrement préférée un groupe alkyle en C₁₋₃, de manière tout particulièrement préférée un groupe alkyle en C₁₋₂ et de manière préférée entre toutes un groupe méthyle.

4. Procédé selon au moins l'une des revendications précédentes,
**caractérisé en ce que**
l'au moins un groupe alcényle est un groupe alcényle en C₂₋₂₅, de préférence un groupe alcényle en C₂₋₁₅, de manière davantage préférée un groupe alcényle en C₂₋₁₀, de manière particulièrement préférée un groupe alcényle en C₂₋₆, de manière tout particulièrement préférée un groupe alcényle en C₂₋₄ et de manière préférée entre toutes un groupe vinyle.

5. Procédé selon au moins l'une des revendications précédentes,
**caractérisé en ce que**
les au moins trois atomes d'halogène sont chacun du chlore.

6. Procédé selon au moins l'une des revendications précédentes,
**caractérisé en ce que**
au moins un parmi l'au moins un groupe aryle, l'au moins un groupe alkyle et l'au moins un groupe alcényle, de préférence au moins deux parmi l'au moins un groupe aryle, l'au moins un groupe alkyle et l'au moins un groupe alcényle et de manière particulièrement préférée l'ensemble de l'au moins un groupe aryle, de l'au moins un groupe alkyle et de l'au moins un groupe alcényle ne sont pas substitués.

7. Procédé selon au moins l'une des revendications précédentes,
**caractérisé en ce que**
à l'étape de réaction, on utilise trois monomères silane qui présentent les formules générales (1) à (3) ci-après :
R¹SiX₃
R²R³SiX₂
R⁴R⁵SiX₂
où :
R¹ est un groupe aryle,
R² est un groupe alcényle,
R³, R⁴, R⁵, sont identiques ou différents, sont un groupe alkyle ou H, à condition qu'au moins l'un de R³, R⁴ ou R⁵ soit un groupe alkyle, et X est dans chaque cas un atome d'halogène.

8. Procédé selon la revendication 7,
**caractérisé en ce que**
le phényltrichlorosilane, le dichlorométhylvinylsilane et le dichlorodiméthylsilane sont utilisés comme monomères silane.

9. Procédé selon les revendications 7 ou 8,
**caractérisé en ce que**
la fraction molaire du monomère silane de formule générale (1) est de 15 à 30 % en moles, la fraction molaire du monomère silane de formule générale (2) est de 5 à 40 % en moles et la fraction molaire du monomère silane de formule générale (3) est de 43 à 66 % en moles par rapport à la somme de ces trois quantités de substance.

10. Polysilane pouvant être obtenu par un procédé selon au moins l'une des revendications précédentes,
**caractérisé en ce que**
celui-ci comprend 0,01 à 0,98 groupe alkyle, 0,01 à 0,96 groupe alcényle et 0,01 à
0,20 groupe aryle, de préférence 0,50 à 0,98 groupe alkyle, 0,01 à 0,30 groupe alcényle et 0,01 à 0,20 groupe aryle, de manière particulièrement préférée 0,77 à 0,96 groupe alkyle, 0,02 à 0,11 groupe alcényle et 0,02 à 0,12 groupe aryle et de manière tout particulièrement préférée 0,84 à 0,92 groupe alkyle, 0,05 à 0,11 groupe alcényle et 0,02 à 0,06 groupe aryle, sur la base du fait que la somme de ces groupes est égale à 1,00.

11. Procédé de fabrication d'un matériau composite à fibres, qui contient des fibres en carbure de silicium et une matrice en carbure de silicium, le procédé de préparation d'un polysilane selon les revendications 1 à 9 comprenant le filage et la pyrolyse ultérieure du polysilane en fibres de carbure de silicium, l'imprégnation des fibres avec le polysilane et une pyrolyse ultérieure.
